# EUROPEAN PATENT APPLICATION

(11) **EP 3 822 812 A1**
(43) Date of publication of application: **19.05.2021**
(21) Application number: 21163752.5
(22) Date of filing: 19.03.2021
(51) Int. Cl.: G06F 16/33, G06F 40/10

(54) **METHOD, APPARATUS AND DEVICE FOR RECOGNIZING WORD SLOT, AND STORAGE MEDIUM**

(30) Priority: 10.06.2020 CN 202010523633
(71) Applicant: BEIJING BAIDU NETCOM SCIENCE AND TECHNOLOGY CO. LTD., 100085 Beijing (CN)
(72) Inventor: DING, Xinzhe, Beijing, 100085 (CN); SUN, Huifeng, Beijing, 100085 (CN); SUN, Shuqi, Beijing, 100085 (CN); SUN, Ke, Beijing, 100085 (CN); LI, Tingting, Beijing, 100085 (CN)
(74) Representative: V.O.

(57) **Abstract**

The present disclosure provides a method, apparatus, and device for recognizing a word slot, and a storage medium, and relates to the technical fields of natural language processing and deep learning. A specific implementation solution includes: receiving a target sentence; determining a first word slot recognition result of the target sentence based on the target sentence and a preset entity set; determining a second word slot recognition result of the target sentence based on the target sentence and a pre-trained word slot recognition model, the word slot recognition model being used to represent a corresponding relationship between the sentence and the word slot recognition result; and determining a target word slot recognition result, based on the first word slot recognition result and the second word slot recognition result. This implementation method can instantly recognize a new entity word set by a user, without collecting a large amount of data, without training a model, and without optimizing model effects, to recognize the user's personalized new word, and has the characteristics of instant, accuracy, and ease of use.

## Description

### TECHNICAL FIELD

The present disclosure relates to the field of computer technology, specifically to the fields of natural language processing and deep learning technology, and more specifically to a method, apparatus and device for recognizing a word slot, and a storage medium.

### BACKGROUND

With the development of intelligent dialogue technology, query understanding (QU) has received more and more attention. Query understanding refers to the process of analyzing a user's search string and understanding the user's intention, which is a standard natural language processing task. Query understanding is generally divided into two main tasks: intent recognition and word slot analysis. Here, intent recognition may be regarded as a classification task to determine what intent of the user a piece of query expresses. Word slot analysis is also used as the basis of intent recognition to assist in intent recognition. Slot analysis may be regarded as a sequence labeling task, labeling specific slot information in the query. For example, for a piece of Query "navigate me to XX Building via YY Street, a route without traffic jams", we may determine that its intent is "Navigate" and it contains 3 slots, "YY Street: user_passby (passby)", "XX Building: user destination (destination)", "without traffic jams: user route type (route type)".

It can be seen that one of the cores of Query understanding is the slot analysis, and slot data is growing explosively every day, and there are more and more user personalized slot information. In addition to using machine learning models to recognize user slot information, for the user personalized information, for example, the user's naming of smart devices at home is ever-changing and having its own characteristics. It is far from satisfying to rely on model recognition alone. Moreover, model recognition needs to accumulate a large amount of data to continuously train and optimize before it can be used, which is a long process.

### SUMMARY

Embodiments of the present disclosure provide a method, apparatus and device for recognizing a word slot, a storage medium, and a computer program product.

According to a first aspect, an embodiment of the present disclosure provides a method for recognizing a word slot, the method including: receiving a target sentence; determining a first word slot recognition result of the target sentence based on the target sentence and a preset entity set; determining a second word slot recognition result of the target sentence based on the target sentence and a pre-trained word slot recognition model, the word slot recognition model being used to represent a corresponding relationship between the sentence and the word slot recognition result; and determining a target word slot recognition result, based on the first word slot recognition result and the second word slot recognition result.

According to a second aspect, an embodiment of the present disclosure provides an apparatus for recognizing a word slot, the apparatus including: a target sentence receiving unit, configured to receive a target sentence; a first word slot recognition unit, configured to determine a first word slot recognition result of the target sentence based on the target sentence and a preset entity set; a second word slot recognition unit, configured to determine a second word slot recognition result of the target sentence based on the target sentence and a pre-trained word slot recognition model, the word slot recognition model being used to represent a corresponding relationship between the sentence and the word slot recognition result; and a recognition result determination unit, configured to determine a target word slot recognition result, based on the first word slot recognition result and the second word slot recognition result.

According to a third aspect, an embodiment of the present disclosure provides an electronic device for recognizing a word slot, including: at least one processor; and a memory, communicatively connected to the at least one processor. The memory stores instructions executable by the at least one processor, the instructions, when executed by the at least one processor, cause the at least one processor to perform the method according to the first aspect.

According to a fourth aspect, an embodiment of the present disclosure provides a non-transitory computer readable storage medium, storing computer instructions, the computer instructions, being used to cause the computer to perform the method according to the first aspect.

According to a fifth aspect, an embodiment of the present disclosure provides a computer program product, including a computer program. The computer program, when executed by a processor, causes the processor to implement the method according to the first aspect.

The technology according to the present disclosure can instantly recognize a new entity word set by a user, without collecting a large amount of data, without training a model, and without optimizing model effects, to recognize the user's personalized new word, and has the characteristics of instant, accuracy, and ease of use.

It should be understood that the content described in this section is not intended to identify the key or important features of embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the present solution and do not constitute a limitation to the present disclosure.
Fig. 1 is a diagram of an example system architecture in which embodiments of the present disclosure may be implemented;
Fig. 2 is a flowchart of a method for recognizing a word slot according to an embodiment of the present disclosure;
Fig. 3 is a schematic diagram of an application scenario of the method for recognizing a word slot according to an embodiment of the present disclosure;
Fig. 4 is a flowchart of the method for recognizing a word slot according to another embodiment of the present disclosure;
Fig. 5 is a schematic structural diagram of an apparatus for recognizing a word slot according to an embodiment of the present disclosure; and
Fig. 6 is a block diagram of an electronic device used to implement the method for recognizing a word slot of the embodiments of the present disclosure.

### DETAILED DESCRIPTION OF EMBODIMENTS

The following describes example embodiments of the present disclosure with reference to accompanying drawings, which include various details of embodiments of the present disclosure to facilitate understanding, and should be regarded as merely as examples. Therefore, those of ordinary skill in the art should realize that various changes and modifications may be made to embodiments described herein without departing from the scope and spirit of the present disclosure. Likewise, for clarity and conciseness, descriptions of well-known functions and structures are omitted in the following description.

It should be noted that embodiments in the present disclosure and features in the embodiments may be combined with each other on a non-conflict basis. The present disclosure will be described below in detail with reference to the accompanying drawings and in combination with the embodiments.

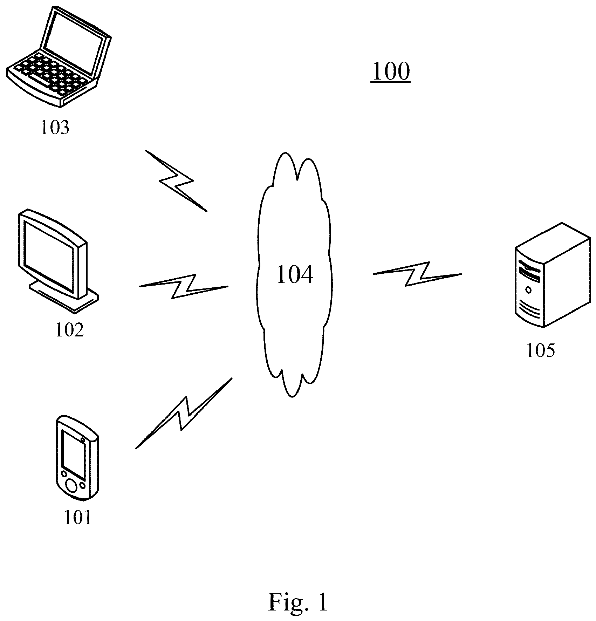

Fig. 1 illustrates an example system architecture 100 of a method for recognizing a word slot or an apparatus for recognizing a word slot in which embodiments of the present disclosure may be implemented.

As shown in Fig. 1, the system architecture 100 may include terminal devices 101, 102, and 103, a network 104, and a server 105. The network 104 is used to provide a communication link medium between the terminal devices 101, 102, and 103 and the server 105. The network 104 may include various types of connections, such as wired, wireless communication links, or optic fibers.

A user may use the terminal devices 101, 102, 103 to interact with the server 105 through the network 104 to receive or send messages, and so on. Various communication client applications, such as voice recognition applications, may be installed on the terminal devices 101, 102, and 103. The terminal devices 101, 102, and 103 may also be equipped with a microphone array and the like.

The terminal devices 101, 102, 103 may be hardware or software. When the terminal devices 101, 102, and 103 are hardware, they may be various electronic devices, including but not limited to smart phones, tablet computers, E-book readers, vehicle-mounted computers, laptop portable computers, desktop computers, and so on. When the terminal devices 101, 102, and 103 are software, they may be installed in the electronic devices listed above. The terminal devices 101, 102, and 103 may be implemented as a plurality of pieces of software or a plurality of software modules (for example, for providing distributed services), or as a single piece of software or a single software module, which is not specifically limited herein.

The server 105 may be a server that provides various services, such as a backend server that processes a target sentence sent by the terminal devices 101, 102, and 103. The backend server may use a word slot recognition model or a new word set to determine a personalized word set by the user in the target sentence, and feedback to the terminal devices 101, 102, and 103 based on the personalized word.

It should be noted that the server 105 may be hardware or software. When the server 105 is hardware, it may be implemented as a distributed server cluster composed of a plurality of servers, or as a single server. When the server 105 is software, it may be implemented as a plurality of pieces of software or a plurality of software modules (for example, for providing distributed services) or as a single piece of software or a single software module, which is not specifically limited herein.

It should be noted that the method for recognizing a word slot provided by embodiments of the present disclosure is generally performed by the server 105. Accordingly, the apparatus for recognizing a word slot is generally provided in the server 105.

It should be understood that the number of terminal devices, networks and servers in Fig. 1 is merely illustrative. Depending on the implementation needs, there may be any number of terminal devices, networks and servers.

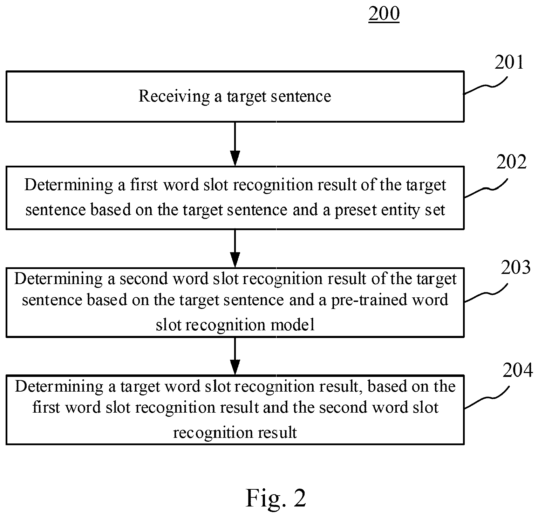

With further reference to Fig. 2, a flow 200 of a method for recognizing a word slot according to an embodiment of the present disclosure is illustrated. The method for recognizing a word slot of the present embodiment includes the following steps.

Step 201, receiving a target sentence.

In the present embodiment, an executing body (for example, the server 105 shown in Fig. 1) of the method for recognizing a word slot may receive the target sentence through various wired or wireless connections. The target sentence may be sent by a user through a terminal, or may be obtained by processing a voice, video or image by the executing body. For example, the user sends a voice to the executing body through the terminal, and the executing body may perform voice recognition on the voice to obtain the target sentence.

Step 202, determining a first word slot recognition result of the target sentence based on the target sentence and a preset entity set.

In the present embodiment, the target sentence may be compared with the preset entity set to determine whether the target sentence includes an entity in the entity set. If included, the first word slot recognition result may be generated based on the entity in the entity set included in the target sentence. If it is not included, it may be determined that the first word slot recognition result is empty. The entity set may include a plurality of entities, and these entities may be user custom entities or associated entities generated based on the custom entities. For example, a custom entity is "the lovely lamp in the living room", and associated entity may be "lamp in the living room" or "the lovely lamp".

Step 203, determining a second word slot recognition result of the target sentence based on the target sentence and a pre-trained word slot recognition model.

In the present embodiment, the target sentence may also be input into the pre-trained word slot recognition model. The word slot recognition model may be used to represent a corresponding relationship between the sentence and the word slot recognition result. The word slot recognition model may be a neural network trained from a large amount of labeling data. The word slot recognition model may output the word slot recognition result of the target sentence. Here, the word slot recognition result is recorded as the second word slot recognition result.

Step 204, determining a target word slot recognition result, based on the first word slot recognition result and the second word slot recognition result.

In the present embodiment, the target word slot recognition result may be determined based on the first word slot recognition result and the second word slot recognition result. The target recognition result may be the first word slot recognition result, the second word slot recognition result, or a combination of the two.

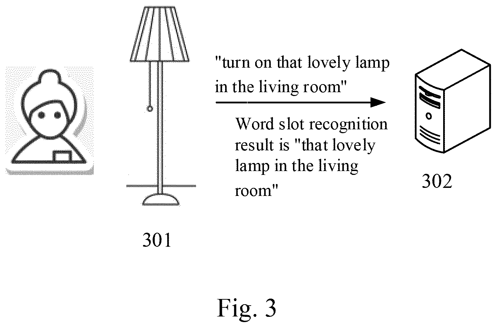

Referring to Fig. 3, which shows a schematic diagram of an application scenario of the method for recognizing a word slot according to an embodiment of the present disclosure. In the scenario shown in Fig. 3, a user may control a smart light 301 through a dialogue with the smart light 301. The above control may include: turn on, turn off, adjust the color of the light, light or dark, etc. The user sets the entity of the smart light 301 as "that lovely lamp in the living room" through custom settings. Then, when the user utters the voice "turn on that lovely lamp in the living room" to the smart light 301, the smart light 301 may upload the voice to a server 302. The server 302 performs voice recognition on the voice to obtain a target sentence, and then performs word slot recognition on the obtained target sentence. The obtained word slot recognition result is "that lovely lamp in the living room".

The method for recognizing a word slot provided by the above embodiments of the present disclosure can instantly recognize a new entity word set by a user, without collecting a large amount of data, without training a model, and without optimizing model effects, to recognize the user's personalized new word, and has the characteristics of instant, accuracy, and ease of use.

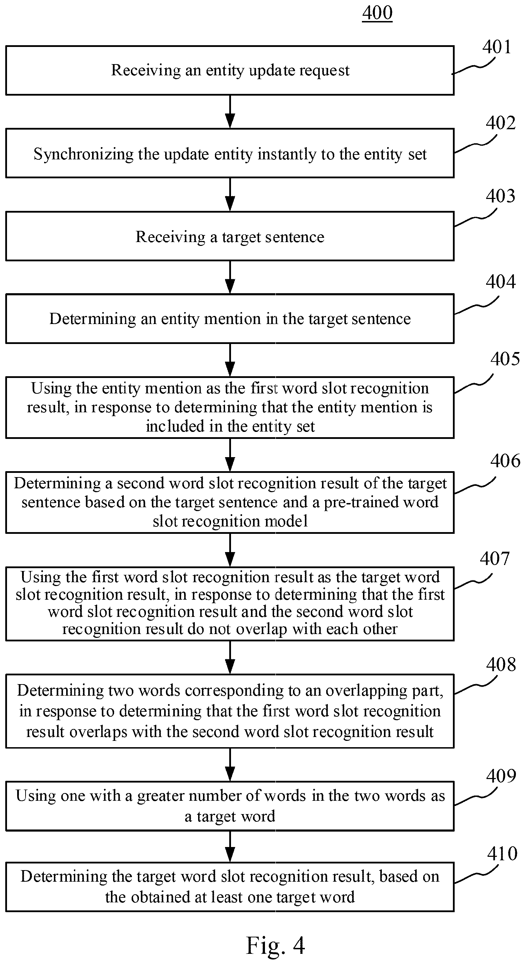

With further reference to Fig. 4, a flow 400 of another embodiment of the method for recognizing a word slot according to the present disclosure is illustrated. As shown in Fig. 4, the method for recognizing a word slot of the present embodiment may include the following steps:

Step 401, receiving an entity update request.

In the present embodiment, the executing body may receive the entity update request. The entity update request may be sent by a user through a terminal. The entity update request may include an update entity. Here, the update entity refers to an entity word newly added by the user.

Step 402, synchronizing the update entity instantly to the entity set.

After receiving the entity update request, the executing body may instantly synchronize the update entity included therein to the entity set through an instant data synchronization service. The instant data synchronization service may store the update entity to the entity set immediately upon receiving the entity update request. The processing speed may reach the second level, so that a new entity set by the user may be updated instantly. The instant data synchronization service may also save the user's update record.

Here, the entity set may be stored in the memory of the executing body. In practical applications, in order to ensure data security, the executing body may also periodically write the data in the entity set to a hard disk. In this way, in the event of a power failure, it may be restored through the instant data synchronization service and the hard disk.

Step 403, receiving a target sentence.

Step 404, determining an entity mention in the target sentence.

In the present embodiment, the executing body may determine the entity mention in the target sentence. Specifically, the executing body may perform word segmentation processing on the target sentence. The noun in each word obtained by the word segmentation processing is used as the entity mention. It may be understood that the target sentence may include one entity mention or a plurality of entity mentions.

Step 405, using the entity mention as the first word slot recognition result, in response to determining that the entity mention is included in the entity set.

In the present embodiment, the executing body may retrieve the entity mention in the entity set. If the entity set includes the entity mention, the entity mention is used as the first word slot recognition result. If the entity set does not include the entity mention, the first word slot recognition result may be empty.

In some alternative implementations of the present embodiment, the entity set may include a plurality of entity subsets, and each entity subset corresponds to a user identification. Each entity subset includes at least one entity. The executing body may also determine the first word slot recognition result through the following steps: determining a target user identification corresponding to the target sentence; and in response to determining that an entity subset corresponding to the target user identification includes the entity mention, using the entity mention as the first word slot recognition result.

In this implementation, the executing body may first determine the target user identification corresponding to the target sentence. Specifically, the executing body may acquire the target user identification from the electronic device that sends the target sentence. Then, the executing body may first determine the entity subset corresponding to the target user identification, and determine if the entity subset includes the entity mention. If the entity subset includes the entity mention , the entity mention is used as the first word slot recognition result. If the entity subset does not include the entity mention, it may be determined that the first word slot recognition result is empty.

In some alternative implementations of the present embodiment, the executing body may also receive a modification request for modifying an entity in the entity set from the user. The modification request may include the entity before the modification and the entity after the modification. After receiving the modification request, the executing body may modify the entity in the entity set.

In some alternative implementations of the present embodiment, the executing body may also send an entity list corresponding to the user identification to the user in response to a request of the user.

Step 406, determining a second word slot recognition result of the target sentence based on the target sentence and a pre-trained word slot recognition model.

Step 407, using the first word slot recognition result as the target word slot recognition result, in response to determining that the first word slot recognition result and the second word slot recognition result do not overlap with each other.

In the present embodiment, the executing body may first determine whether the first word slot recognition result and the second word slot recognition result overlap. Overlapping means that at least one word in the first word slot recognition result and at least one word in the second word slot recognition result share at least one character. For example, the first word slot recognition result includes words A and B, and the second word slot recognition result includes words C and D. If there are no identical character between A and C, between A and D, between B and C, and between B and D, then the first word slot recognition result and the second word slot recognition result do not overlap with each other.

Step 408, determining two words corresponding to an overlapping part, in response to determining that the first word slot recognition result overlaps with the second word slot recognition result.

If an identical character exists between any one of A and C, A and D, B and C, or B and D, it is considered that the first word slot recognition result overlaps with the second word slot recognition result. In this regard, the two words corresponding to the overlapping part may be determined.

Step 409, using one with a greater number of words in the two words as a target word.

The executing body may use the one with a greater number of words in the two words as the target word. In this way, a plurality of target words may be obtained.

Step 410, determining the target word slot recognition result, based on the obtained at least one target word.

The executing body may use the obtained each target word as the target word slot recognition result.

The method for recognizing a word slot provided by the above embodiment of the present disclosure can instantly (that is, in seconds) store and recognize a new entity word provided by the user, without collecting a large amount of data, without training a model, and without optimizing model effects, to recognize the user's personalized new word, and has the characteristics of instant, accuracy, and ease of use.

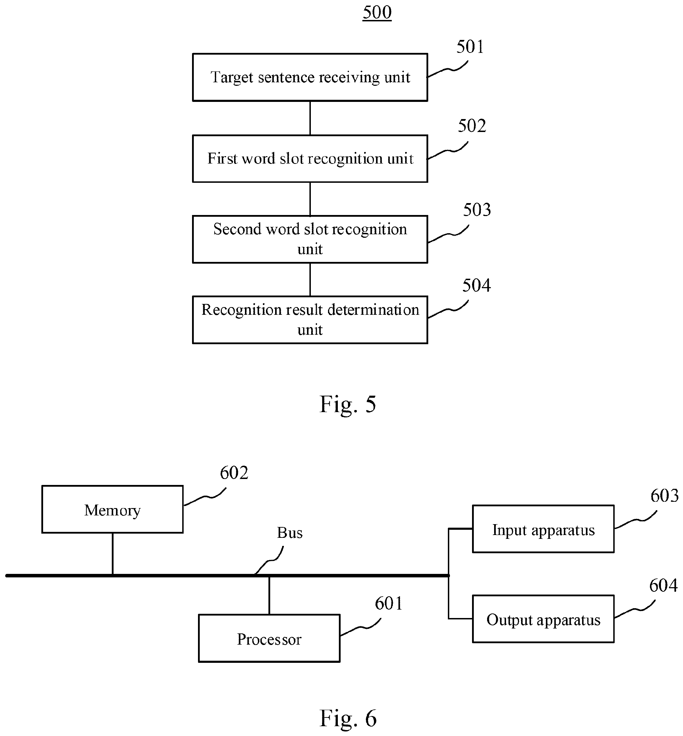

With further reference to Fig. 5, as an implementation of the method shown in the above figures, an embodiment of the present disclosure provides an apparatus for recognizing a word slot, and the apparatus embodiment corresponds to the method embodiment as shown in Fig. 2. The apparatus may be specifically applied to various electronic devices.

As shown in Fig. 5, an apparatus 500 for recognizing a word slot of the present embodiment includes: a target sentence receiving unit 501, a first word slot recognition unit 502, a second word slot recognition unit 503 and a recognition result determination unit 504.

The target sentence receiving unit 501 is configured to receive a target sentence.

The first word slot recognition unit 502 is configured to determine a first word slot recognition result of the target sentence based on the target sentence and a preset entity set.

The second word slot recognition unit 503 is configured to determine a second word slot recognition result of the target sentence based on the target sentence and a pre-trained word slot recognition model. The word slot recognition model is used to represent a corresponding relationship between the sentence and the word slot recognition result.

The recognition result determination unit 504 is configured to determine a target word slot recognition result, based on the first word slot recognition result and the second word slot recognition result.

In some alternative implementations of the present embodiment, the first word slot recognition unit 502 may further include an entity mention determination module and a first word slot recognition module not shown in Fig. 5.

The entity mention determination module is configured to determine an entity mention in the target sentence.

The first word slot recognition module is configured to use the entity mention as the first word slot recognition result, in response to determining that the entity mention is included in the entity set.

In some alternative implementations of the present embodiment, the entity set includes a plurality of entity subsets, and entities in a single entity subset correspond to the same user identification. The first word slot recognition module is further configured to: determine a target user identification corresponding to the target sentence; and in response to determining that an entity subset corresponding to the target user identification includes the entity mention, use the entity mention as the first word slot recognition result.

In some alternative implementations of the present embodiment, the recognition result determination unit 504 may be further configured to: use the first word slot recognition result as the target word slot recognition result, in response to determining that the first word slot recognition result and the second word slot recognition result do not overlap with each other.

In some alternative implementations of the present embodiment, the first word slot recognition result includes at least one word, and the second word slot recognition result includes at least one word. The recognition result determination unit 504 may be further configured to: determine two words corresponding to an overlapping part, in response to determining that the first word slot recognition result overlaps with the second word slot recognition result; use one with a greater number of words in the two words as a target word; and determine the target word slot recognition result, based on the obtained at least one target word.

In some alternative implementations of the present embodiment, the apparatus 500 may further include an instant synchronization unit not shown in Fig. 5, configured to: receive an entity update request, the entity update request including an update entity; and synchronize the update entity instantly to the entity set.

It should be understood that the units 501 to 504 recorded in the apparatus 500 for recognizing a word slot respectively correspond to the steps in the method described with reference to Fig. 2. Therefore, the operations and features described above for the method for recognizing a word slot are also applicable to the apparatus 500 and the units included therein, and detailed description thereof will be omitted.

According to an embodiment of the present disclosure, embodiments of the present disclosure further provide an electronic device and a readable storage medium.

As shown in Fig. 6, which is a block diagram of an electronic device of a method for recognizing a word slot according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 6, one processor 601 is used as an example.

The memory 602 is a non-transitory computer readable storage medium provided by the present disclosure. The memory stores instructions executable by at least one processor, so that the at least one processor performs the method for recognizing a word slot provided by the present disclosure. The non-transitory computer readable storage medium of the present disclosure stores computer instructions for causing a computer to perform the method for recognizing a word slot provided by the present disclosure.

The memory 602, as a non-transitory computer readable storage medium, may be used to store non-transitory software programs, non-transitory computer executable programs and modules, such as program instructions/modules corresponding to the method for processing parking in the embodiments of the present disclosure (for example, the target sentence receiving unit 501, the first word slot recognition unit 502, and the second word slot recognition unit 503 shown in Fig. 5). The processor 601 executes the non-transitory software programs, instructions, and modules stored in the memory 602 to execute various functional applications and data processing of the server, that is, to implement the method for recognizing a word slot in the foregoing method embodiment.

The memory 602 may include a storage program area and a storage data area, where the storage program area may store an operating system and at least one function required application program; and the storage data area may store data created by the use of the electronic device according to the method for processing parking, etc. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device of the method for processing parking through a network. Examples of the above network include but are not limited to the Internet, intranet, local area network, mobile communication network, and combinations thereof.

The electronic device of the method for recognizing a word slot may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the method for processing parking, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

An embodiment of the present disclosure further provides a computer program product, including a computer program. The computer program, when executed by a processor, causes the processor to implement the method for recognizing a word slot according any embodiment of the present disclosure.

The technical solution according to the present disclosure can instantly recognize a new entity word set by a user, without collecting a large amount of data, without training a model, and without optimizing model effects, to recognize the user's personalized new word, and has the characteristics of instant, accuracy, and ease of use.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for recognizing a word slot, the method comprising:
receiving (201) a target sentence;
determining (202) a first word slot recognition result of the target sentence based on the target sentence and a preset entity set;
determining (203) a second word slot recognition result of the target sentence based on the target sentence and a pre-trained word slot recognition model, the word slot recognition model being used to represent a corresponding relationship between the sentence and the word slot recognition result; and
determining (204) a target word slot recognition result, based on the first word slot recognition result and the second word slot recognition result.

2. The method according to claim 1, wherein the determining a first word slot recognition result of the target sentence based on the target sentence and a preset entity set, comprises:
determining an entity mention in the target sentence; and
using the entity mention as the first word slot recognition result, in response to determining that the entity mention is included in the entity set.

3. The method according to claim 2, wherein the entity set comprises a plurality of entity subsets, and entities in a single entity subset correspond to a same user identification; and
the using the entity mention as the first word slot recognition result, in response to determining that the entity mention is included in the entity set, comprises:
determining a target user identification corresponding to the target sentence; and
in response to determining that an entity subset corresponding to the target user identification comprises the entity mention, using the entity mention as the first word slot recognition result.

4. The method according to any one of claims 1-3, wherein the determining a target word slot recognition result, based on the first word slot recognition result and the second word slot recognition result, comprises:
using the first word slot recognition result as the target word slot recognition result, in response to determining that the first word slot recognition result and the second word slot recognition result do not overlap with each other.

5. The method according to any one of claims 1-3, wherein the first word slot recognition result comprises at least one word, and the second word slot recognition result comprises at least one word; and
the determining a target word slot recognition result, based on the first word slot recognition result and the second word slot recognition result, comprises:
determining two words corresponding to an overlapping part, in response to determining that the first word slot recognition result overlaps with the second word slot recognition result;
using one with a greater number of words in the two words as a target word; and
determining the target word slot recognition result, based on the obtained at least one target word.

6. The method according to any one of claims 1-5, wherein the method further comprises:
receiving an entity update request, the entity update request comprising an update entity; and
synchronizing the update entity instantly to the entity set.

7. An apparatus for recognizing a word slot, the apparatus comprising:
a target sentence receiving unit (501), configured to receive a target sentence;
a first word slot recognition unit (502), configured to determine a first word slot recognition result of the target sentence based on the target sentence and a preset entity set;
a second word slot recognition unit (503), configured to determine a second word slot recognition result of the target sentence based on the target sentence and a pre-trained word slot recognition model, the word slot recognition model being used to represent a corresponding relationship between the sentence and the word slot recognition result; and
a recognition result determination unit (504), configured to determine a target word slot recognition result, based on the first word slot recognition result and the second word slot recognition result.

8. The apparatus according to claim 7, wherein the first word slot recognition unit (502) comprises:
an entity mention determination module, configured to determine an entity mention in the target sentence; and
a first word slot recognition module, configured to use the entity mention as the first word slot recognition result, in response to determining that the entity mention is included in the entity set.

9. The apparatus according to claim 8, wherein the entity set comprises a plurality of entity subsets, and entities in a single entity subset correspond to a same user identification; and
the first word slot recognition module is further configured to:
determine a target user identification corresponding to the target sentence; and
in response to determining that an entity subset corresponding to the target user identification comprises the entity mention, use the entity mention as the first word slot recognition result.

10. The apparatus according to any one of claim 7-9, wherein the recognition result determination unit (504) is further configured to:
use the first word slot recognition result as the target word slot recognition result, in response to determining that the first word slot recognition result and the second word slot recognition result do not overlap with each other.

11. The apparatus according to any one of claims 7-9, wherein the first word slot recognition result comprises at least one word, and the second word slot recognition result comprises at least one word; and
the recognition result determination unit (504) is further configured to:
determine two words corresponding to an overlapping part, in response to determining that the first word slot recognition result overlaps with the second word slot recognition result;
use one with a greater number of words in the two words as a target word; and
determine the target word slot recognition result, based on the obtained at least one target word.

12. The apparatus according to any one of claims 7-11, wherein the apparatus further comprises an instant synchronization unit, configured to:
receive an entity update request, the entity update request comprising an update entity; and
synchronize the update entity instantly to the entity set.

13. An electronic device for recognizing a word slot, comprising:
at least one processor (601); and
a memory (602), communicatively connected to the at least one processor;
wherein the memory stores instructions executable by the at least one processor, the instructions, when executed by the at least one processor, cause the at least one processor to perform the method according to any one of claims 1-6.

14. A non-transitory computer readable storage medium, storing computer instructions, the computer instructions, being used to cause the computer to perform the method according to any one of claims 1-6.

15. A computer program product, comprising a computer program, wherein the computer program, when executed by a processor, causes the processor to implement the method according to any one of claims 1-6.
